# EUROPÄISCHE PATENTSCHRIFT

(11) **EP 3 420 250 B1**
(45) Veröffentlichungstag und Bekanntmachung des Hinweises auf die Patenterteilung: **08.04.2020**
(21) Anmeldenummer: 17706437.5
(22) Anmeldetag: 17.02.2017
(51) Int. Cl.: F16H 57/027

(54) **DRUCKAUSGLEICHSVORRICHTUNG FÜR EIN GEHÄUSE, INSBESONDERE EINES KRAFTFAHRZEUGS, SOWIE KOMPONENTE FÜR EIN KRAFTFAHRZEUG**
PRESSURE COMPENSATION DEVICE FOR A HOUSING, IN PARTICULAR OF A MOTOR VEHICLE, AND COMPONENT FOR A MOTOR VEHICLE
DISPOSITIF DE COMPENSATION DE PRESSION POUR BOÎTIER, EN PARTICULIER D'UN VÉHICULE AUTOMOBILE ET COMPOSANT POUR VÉHICULE AUTOMOBILE

(30) Priorität: 25.02.2016 DE 102016202965
(43) Veröffentlichungstag der Anmeldung: 02.01.2019
(73) Patentinhaber: Audi AG, 85045 Ingolstadt (DE)
(72) Erfinder: STREICHER, Michael, 85055 Ingolstadt (DE); UTSCHIG, Marco, 99510 Apolda (DE)
(86) Internationale Anmeldenummer: PCT/EP2017/053669
(87) Internationale Veröffentlichungsnummer: WO 2017/144370

(56) Entgegenhaltungen:
- CN-U- 203 051 707
- DE-B3-102013 016 586
- US-A1- 2004 003 846

## Beschreibung

Die Erfindung betrifft eine Druckausgleichsvorrichtung für ein Gehäuse, insbesondere eines Kraftfahrzeugs, gemäß dem Oberbegriff von Patentanspruch 1 sowie eine Komponente für ein Kraftfahrzeug.

Eine solche Druckausgleichsvorrichtung für ein Gehäuse, insbesondere eines Kraftfahrzeugs, ist beispielsweise bereits der DE 10 2013 016 586 B3 als bekannt zu entnehmen. Die Druckausgleichsvorrichtung umfasst wenigstens ein Druckausgleichsventil, welches eine ein von einem gasförmigen Medium durchströmbares Volumen des Druckausgleichsventils begrenzende innenumfangsseitige Mantelfläche aufweist. Bei dem gasförmigen Medium handelt es sich beispielsweise um Luft, die zum Druckausgleich durch das Volumen und somit durch das Druckausgleichsventil strömen kann. Über das Druckausgleichsventil beziehungsweise das Volumen kann beispielsweise das gasförmige Medium aus dem Gehäuse an die Umgebung des Gehäuses strömen, wodurch das Gehäuse entlüftet wird. Durch dieses Entlüften kann ein übermäßiger Druckanstieg in dem Gehäuse vermieden werden. Somit kann das Druckausgleichsventil als Entlüftungsventil fungieren.

Alternativ oder zusätzlich ist es denkbar, dass über das Druckausgleichsventil beziehungsweise das Volumen das gasförmige Medium beziehungsweise die Luft von der Umgebung in das Gehäuse strömen kann, wodurch das Gehäuse belüftet wird. Hierdurch kann die Entstehung eines übermäßigen Unterdrucks in dem Gehäuse vermieden werden. Somit kann das Druckausgleichsventil als Belüftungsventil fungieren. Das Druckausgleichsventil stellt somit den Druckausgleich zwischen dem Gehäuse, insbesondere einem Innenraum des Gehäuses, und der Umgebung des Gehäuses beziehungsweise des Innenraums sicher.

Das Druckausgleichsventil weist ferner eine der innenumfangsseitigen Mantelfläche abgewandte außenumfangsseitige Mantelfläche und wenigstens eine von dem gasförmigen Medium, insbesondere Luft, durchströmbare Druckausgleichsöffnung auf. Die Druckausgleichsöffnung mündet einerseits in das Volumen und andererseits an die Umgebung des Druckausgleichsventils, sodass das Medium aus der Umgebung über die Druckausgleichsöffnung in das Volumen beziehungsweise aus dem Volumen über die Druckausgleichsöffnung an die Umgebung des Druckausgleichsventils strömen kann. Die Druckausgleichsöffnung ist dabei vollständig von Wandungsbereichen des Druckausgleichsventils begrenzt, wobei die die Druckausgleichsöffnung vollständig begrenzenden Wandungsbereiche aus einem elastisch verformbaren Werkstoff wie beispielsweise Gummi gebildet sind.

Hierdurch können die Wandungsbereiche die Druckausgleichsöffnung bedarfsgerecht freigeben, um dadurch einen Druckausgleich zwischen dem Gehäuse und der Umgebung zu realisieren. Bei nicht stattfindendem Druckausgleich zwischen dem Gehäuse und der Umgebung können die aus dem elastisch verformbaren Werkstoff gebildeten Wandungsbereiche die Druckausgleichsöffnung beispielsweise verschließen, um beispielsweise ein Eindringen von Schmutz oder Feuchtigkeit in das Volumen zu verhindern. Die Druckausgleichsvorrichtung umfasst ferner wenigstens eine Schutzkappe.

Des Weiteren offenbart die WO 2013/156887 A1 ein Entlüftungselement für ein Gehäuse zum Aufnehmen einer elektrischen, mechanischen oder elektromechanischen Komponente. Auch die CN 203051707 U, die CN 104405859 A und die CN 204004328 U offenbaren jeweilige Entlüftungselemente.

Aufgabe der vorliegenden Erfindung ist es, eine Druckausgleichsvorrichtung und eine Komponente der eingangs genannten Art derart weiterzuentwickeln, dass ein Eindringen von Schmutz und Feuchtigkeit in das Volumen des Druckausgleichsventils effektiv vermieden werden kann.

Diese Aufgabe wird durch eine Druckausgleichsvorrichtung mit den Merkmalen des Patentanspruchs 1 sowie durch eine Komponente mit den Merkmalen des Patentanspruchs 8 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Druckausgleichsvorrichtung für ein Gehäuse, insbesondere eines Kraftfahrzeugs wie beispielsweise eines Personenkraftwagens. Beispielsweise ist das Gehäuse ein Gehäuse eines Getriebes wie beispielsweise eines Achs- beziehungsweise Differenzialgetriebes des Kraftfahrzeugs. Die Druckausgleichsvorrichtung umfasst wenigstens ein Druckausgleichsventil, welches eine ein von einem gasförmigen Medium durchströmbares Volumen des Druckausgleichsventils begrenzende innenumfangsseitige Mantelfläche, eine der innenumfangsseitigen Mantelfläche abgewandte außenumfangsseitige Mantelfläche und wenigstens eine von dem Medium durchströmbare und vollständig von aus einem elastisch verformbaren Werkstoff gebildeten Wandungsbereichen des Druckausgleichsventils begrenzte Druckausgleichsöffnung aufweist. Ferner umfasst die Druckausgleichsvorrichtung wenigstens eine Schutzkappe.

Um nun ein unerwünschtes Eindringen von Schmutz und Feuchtigkeit in das Volumen des Druckausgleichsventils besonders effektiv vermeiden zu können, ist es erfindungsgemäß vorgesehen, dass die außenumfangsseitige Mantelfläche bis auf einen in Überdeckung mit einer von dem Medium durchströmbaren und eine Fläche, die in einem Bereich von einschließlich bis einschließlich 5 Quadratmillimetern liegt, aufweisenden Durchströmöffnung der Schutzkappe angeordneten Teilbereich der außenumfangsseitigen Mantelfläche vollständig von der Schutzkappe umgeben ist. Mit anderen Worten weist die Schutzkappe eine, insbesondere genau eine, von dem gasförmigen Medium durchströmbare Durchströmöffnung auf. Über diese Durchströmöffnung kann das gasförmige Medium beispielsweise aus der Umgebung der Schutzkappe in die Schutzkappe einströmen und dann weiter die Druckausgleichsöffnung durchströmen und in das Volumen des Druckausgleichsventils einströmen. Alternativ oder zusätzlich ist es denkbar, dass das das Volumen durchströmende Medium die Druckausgleichsöffnung und daraufhin die Durchströmöffnung durchströmt und somit durch die Durchströmöffnung an die Umgebung der Schutzkappe strömt.

Die Durchströmöffnung weist dabei eine Fläche, das heißt einen von dem Medium durchströmbaren Strömungsquerschnitt auf, welche beziehungsweise welcher in einem Bereich von einschließlich 0,95 Quadratmillimeter bis einschließlich 5 Quadratmillimetern liegt. Ferner weist die innenseitig der Schutzkappe angeordnete außenumfangsseitige Mantelfläche des Druckausgleichsventils einen Teilbereich auf, welcher in Überdeckung beziehungsweise Überlappung mit der Durchströmöffnung der Schutzkappe angeordnet ist. Somit wird der Teilbereich der außenumfangsseitigen Mantelfläche nicht von der Schutzkappe überdeckt. Bis auf diesen Teilbereich umschließt die Schutzkappe die außenumfangsseitige Mantelfläche des Druckausgleichsventils vollständig beziehungsweise vollumfänglich, sodass die Wahrscheinlichkeit, dass Schmutz und Feuchtigkeit in die Schutzkappe und weiter in das Volumen eindringen, besonders gering gehalten werden kann. Dadurch kann ein Eindringen von Schmutz und Feuchtigkeit beziehungsweise Wasser in das Gehäuse vermieden werden, sodass eine besonders hohe Funktionserfüllungssicherheit einer das Gehäuse und die Druckausgleichsvorrichtung aufweisenden Komponente des Kraftfahrzeugs gewährleistet werden kann.

Der Erfindung liegt insbesondere die Erkenntnis zugrunde, dass die Anforderung an die Dichtheit von Kraftfahrzeugen stetig steigt, wobei auch Wasserdurchfahrten mit einer besonders hohen Wattiefe durchzuführen sein müssen, ohne dass eine übermäßige Menge an Wasser in das mit der Druckausgleichsvorrichtung ausgestattete Gehäuse eindringen kann. Insbesondere bei Schwallwasser oder bei einem Eintauchen des Gehäuses in eine kalte Flüssigkeit kühlt das Gehäuse rasch ab, sodass in dem Gehäuse ein Unterdruck entsteht. Dabei kann bei üblichen Druckausgleichsvorrichtungen über das Druckausgleichsventil Wasser in das Gehäuse gesaugt werden, wodurch die Funktion der das Gehäuse umfassenden Komponente beeinträchtigt werden kann. Darüber hinaus wurde gefunden, dass sich bei herkömmlichen Druckausgleichsvorrichtungen ein leichter Ölnebel an das Druckausgleichsventil anlegen kann, sodass dort eine Schmutzanhäufung beziehungsweise ein Schmutzfilm entstehen kann.

Hierdurch kann die Funktionsweise des Druckausgleichsventils beeinflusst werden. Des Weiteren kann durch Fertigungsschwankungen des Druckausgleichsventils eine vollständige Absicherung seiner Funktion nicht gewährleistet werden, insbesondere, wenn das Druckausgleichsventil und somit die Wandungsbereiche aus Gummi beziehungsweise aus einer Gummimischung gebildet sind. Im Rahmen der Fertigungsschwankungen kann es zu Schwankungen der Gummimischung sowie zu Schwankungen der Positionierung und der Abnutzung von Gusswerkzeugen kommen, mittels welchen das Druckausgleichsventil aus Gummi hergestellt wird. Somit können selbst Wasserspritzer bei herkömmlichen Komponenten über deren Druckausgleichsvorrichtung in die Komponente beziehungsweise in das Gehäuse eindringen.

Ein solches unerwünschtes Eindringen von Wasser in das Gehäuse kann mittels der erfindungsgemäßen Druckausgleichsvorrichtung vermieden werden, da das beispielsweise als Gummiventil ausgebildete Druckausgleichsventil mittels der Schutzkappe effektiv geschützt werden kann. Gleichzeitig kann eine hinreichende Entlüftung und/oder Belüftung des Gehäuses gewährleistet werden, da zum Druckausgleich eine hinreichend große Menge des Mediums hinreichend schnell durch die Durchströmöffnung strömen kann. Dadurch kann die Entstehung eines übermäßigen Unterdrucks beziehungsweise eines übermäßigen Überdrucks in dem Gehäuse sicher vermieden werden. Überraschend wurde gefunden, dass die in dem genannten Bereich liegende Fläche der Durchströmöffnung einerseits einen schnellen und sicheren Druckausgleich und andererseits einen sehr guten Schutz vor Wasser- und Schmutzeintrag in das Gehäuse ermöglicht.

Ferner kann eine übermäßige Verschmutzung des Druckausgleichsventils sicher vermieden werden, sodass mittels der erfindungsgemäßen Druckausgleichsvorrichtung sowohl ein übermäßiger Wassereintritt in das Gehäuse als auch eine mögliche, eigenschaftsbeeinflussende Verschmutzung des Druckausgleichsventils sicher verhindert werden können. Die Schutzkappe umschließt das Druckausgleichsventil zumindest nahezu vollumfänglich und verhindert somit einen direkten Kontakt des Druckausgleichsventils mit Spritz-, Schwallwasser und Schmutz.

In vorteilhafter Ausgestaltung der Erfindung liegt die Fläche der Durchströmöffnung in einem Bereich von einschließlich 0,95 Quadratmillimeter bis einschließlich 3,2 Quadratmillimetern. Dadurch kann die Gefahr, dass Wasser und Schmutz in das Gehäuse eindringen können, besonders gering gehalten werden bei gleichzeitiger Realisierung einer hinreichenden Entlüftung beziehungsweise Belüftung des Gehäuses.

Bei einer weiteren vorteilhaften Ausführungsform der Erfindung ist es vorgesehen, dass sich zumindest ein Längenbereich der Durchströmöffnung in Richtung des Volumens verjüngt. Mit anderen Worten ist die Durchströmöffnung zumindest in dem genannten Längenbereich beispielsweise konisch ausgebildet, sodass ein übermäßiges Eindringen von Schmutz und Feuchtigkeit in die Schutzkappe und somit weiter in das Volumen besonders sicher vermieden werden kann bei gleichzeitiger Realisierung einer hinreichenden Entlüftung beziehungsweise Belüftung des Gehäuses.

Um ein übermäßiges Eindringen von Schmutz und Feuchtigkeit in das Gehäuse besonders sicher zu vermeiden, ist es bei einer weiteren Ausführungsform der Erfindung vorgesehen, dass die Schutzkappe wenigstens zwei Kappenteile aufweist, welche über wenigstens ein Scharnier miteinander verbunden und relativ zueinander verschwenkbar sind. Dadurch kann die Schutzkappe besonders einfach montiert werden, sodass die Gefahr von Fehlmontagen der Schutzkappe und daraus resultierende Funktionsbeeinträchtigungen der Schutzkappe vermieden werden können. In der Folge kann das Druckausgleichsventil besonders effektiv mittels der Schutzkappe geschützt werden.

Als weiterhin besonders vorteilhaft hat es sich gezeigt, wenn die Kappenteile einstückig miteinander ausgebildet sind, wobei das Scharnier als Filmscharnier ausgebildet ist. Dabei ist das Filmscharnier durch eine Wanddickenreduzierung der einstückig miteinander ausgebildeten Kappenteile gebildet. Mit anderen Worten weist die Schutzkappe im Bereich des Filmscharniers eine geringere Wanddicke als in sich an diesen Bereich anschließenden weiteren Teilbereichen der Schutzkappe auf, sodass die Kappenteile einstückig miteinander ausgebildet und insbesondere über das Filmscharnier verschwenkbar miteinander verbunden sind, jedoch auf besonders einfache Weise um eine durch das Filmscharnier gebildete Schwenkachse relativ zueinander verschwenkt werden können. Hierdurch kann eine besonders vorteilhafte Dichtheit der Schutzkappe realisiert werden, sodass ein übermäßiges Eindringen von Schmutz und Feuchtigkeit in die Schutzkappe und weiter in das Volumen sicher vermieden werden kann.

Eine weitere Ausführungsform zeichnet sich dadurch aus, dass die Kappenteile jeweilige Verbindungselemente aufweisen, mittels welchen die Kappenteile, insbesondere formschlüssig, miteinander verbindbar, insbesondere verrastbar, sind. In vollständig hergestelltem Zustand des Kraftfahrzeugs sind die Kappenteile über die Verbindungselemente miteinander verbunden und somit sicher aneinander gehalten, sodass das Druckausgleichsventil mittels der Schutzkappe sicher und effektiv geschützt werden kann.

In weiterer Ausgestaltung der Erfindung ist die Schutzkappe formschlüssig direkt, das heißt das Druckausgleichsventil berührend und/oder unabhängig vom Gehäuse, mit dem Druckausgleichsventil verbunden. Beispielsweise ist die Schutzkappe an das Druckausgleichsventil angeklipst beziehungsweise in das Druckausgleichsventil eingeklipst und somit vorzugsweise unabhängig von dem Gehäuse an dem Druckausgleichsventil befestigt, wodurch die Schutzkappe das Druckausgleichsventil besonders vorteilhaft schützen kann.

Ein zweiter Aspekt der Erfindung betrifft eine Komponente für ein Kraftfahrzeug wie beispielsweise einen Personenkraftwagen. Die Komponente umfasst wenigstens ein Gehäuse und wenigstens eine erfindungsgemäße Druckausgleichsvorrichtung. Vorteile und vorteilhafte Ausgestaltungen der erfindungsgemäßen Druckausgleichsvorrichtung sind als Vorteile und vorteilhafte Ausgestaltungen der erfindungsgemäßen Komponente anzusehen und umgekehrt.

Die Komponente ist beispielsweise ein Getriebe, über welches Räder des Kraftfahrzeugs antreibbar sind. Beispielsweise ist das Getriebe als Achsgetriebe ausgebildet. Das Achsgetriebe wird auch als Differenzial oder Differenzialgetriebe bezeichnet und hat die Aufgabe, Antriebskräfte auf die Räder des Kraftfahrzeugs zu übertragen und einen Drehzahlausgleich zwischen dem kurveninneren und dem kurvenäußeren Rad zu ermöglichen. Insbesondere ein solches Getriebe kommt bei einer Wasserdurchfahrt in direkten Kontakt mit kaltem Wasser, wodurch das Getriebe, insbesondere dessen Gehäuse, besonders schnell abkühlt. Daraus kann die Entstehung eines Unterdrucks in dem Gehäuse resultieren, wobei dieser Unterdruck jedoch über die Druckausgleichsvorrichtung besonders schnell ausgeglichen werden kann. Mittels der Druckausgleichsvorrichtung werden auch bei solchen Wasserdurchfahrten ein Eindringen von Wasser in das Gehäuse und eine übermäßige Verschmutzung des Druckausgleichsventils verhindert, sodass eine besonders hohe Funktionserfüllungssicherheit der Komponente gewährleistet werden kann.

Die Ausgestaltung der die Entlüftungsöffnung vollständig begrenzenden Wandungsbereiche aus einem elastisch verformbaren Werkstoff wie beispielsweise Gummi ist insofern vorteilhaft, als die Wandungsbereiche die beispielsweise als Schlitz, das heißt Entlüftungsschlitz, ausgebildete Entlüftungsöffnung beispielsweise bei einem Druckausgleich zwischen dem Gehäuse und der Umgebung freigeben können, wenn im Rahmen des Druckausgleichs ein gasförmiges Medium wie beispielsweise Luft durch die Entlüftungsöffnung strömt und dabei in das Gehäuse einströmt oder aus dem Gehäuse ausströmt. Findet ein solcher Druckausgleich jedoch nicht statt, so ist die Entlüftungsöffnung durch die Wandungsbereiche beispielsweise verschlossen und dadurch fluidisch versperrt. Infolge einer Differenz zwischen einem im Inneren des Gehäuses herrschenden ersten Druck und einem in der Umgebung des Gehäuses herrschenden zweiten Druck kommt es beispielsweise zu einer Strömung des gasförmigen Mediums durch die Entlüftungsöffnung, wodurch die Wandungsbereiche elastisch verformt werden und dadurch die Entlüftungsöffnung freigeben. Endet die Strömung, so können die Wandungsbereiche elastisch zurückfedern und die Durchströmöffnung beispielsweise fluidisch versperren.

Als besonders vorteilhaft hat es sich gezeigt, wenn die Durchströmöffnung auf einer in Fahrzeughochrichtung nach unten weisenden Seite der Schutzkappe angeordnet ist. Dadurch kann die Gefahr, dass eine übermäßige Schmutz- und Wassermenge in die Schutzkappe und weiter in das Volumen eindringt, besonders gering gehalten werden. Ferner kann beispielsweise Feuchtigkeit und Kondenswasser aus der Schutzkappe durch die Entlüftungsöffnung schwerkraftbedingt ausströmen, sodass eine übermäßige Feuchtigkeitsansammlung in der Schutzkappe verhindert werden kann.

Um eine übermäßige Feuchtigkeitsansammlung in der Schutzkappe besonders effektiv zu vermeiden, ist es bei einer weiteren Ausführungsform des zweiten Aspekts der Erfindung vorgesehen, dass die Durchströmöffnung an der in Fahrzeughochrichtung tiefsten Stelle einer der außenumfangsseitigen Mantelfläche zugewandten, weiteren Innenumfangsseitigen Mantelfläche der Schutzkappe angeordnet ist. Mit anderen Worten, nimmt die Druckausgleichsvorrichtung in vollständig hergestelltem Zustand des Kraftfahrzeugs ihre Einbaulage ein, so ist die Durchströmöffnung bezogen auf diese Einbaulage auf einer in Fahrzeughochrichtung nach unten weisenden Seite der Schutzkappe angeordnet, wobei alternativ oder zusätzlich vorgesehen sein kann, dass die Durchströmöffnung an der in Fahrzeughochrichtung tiefsten Stelle der weiteren innenumfangsseitigen Mantelfläche angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische und perspektivische Draufsicht einer als Achsgetriebe ausgebildeten Komponente für ein Kraftfahrzeug, mit einer Druckausgleichsvorrichtung, welche wenigstens ein Druckausgleichsventil aufweist, dessen außenumfangsseitige Mantelfläche bis auf einen geringen Teilbereich vollständig von einer Schutzkappe umgeben ist, wobei Fig. 1 eine erste Ausführungsform der Druckausgleichsvorrichtung zeigt;
- Fig. 2: ausschnittsweise eine schematische Schnittansicht des Achsgetriebes mit der Druckausgleichsvorrichtung gemäß Fig. 1;
- Fig. 3: eine schematische Seitenansicht der Schutzkappe gemäß einer ersten Ausführungsform;
- Fig. 4: eine schematische Rückansicht der Schutzkappe gemäß der ersten Ausführungsform;
- Fig. 5: eine schematische Schnittansicht der Schutzkappe gemäß der ersten Ausführungsform;
- Fig. 6: ausschnittsweise eine weitere schematische Schnittansicht der Schutzkappe gemäß der ersten Ausführungsform; und
- Fig. 7: eine schematische Schnittansicht der Schutzkappe der Druckausgleichsvorrichtung gemäß einer zweiten Ausführungsform.

In den Fig. sind gleiche oder funktionsgleiche Elemente mit gleichen Bezugszeichen versehen.

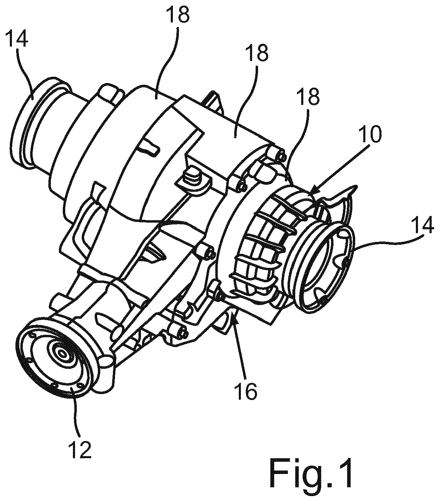

Fig. 1 zeigt in einer schematischen und perspektivischen Draufsicht eine Komponente in Form eines als Achsgetriebe 10 ausgebildeten Getriebes für ein Kraftfahrzeug, insbesondere in Form eines Personenkraftwagens. Das Achsgetriebe 10 ist ein Differenzialgetriebe, über welches Räder des Kraftfahrzeugs von einem Antriebsmotor wie beispielsweise einer Verbrennungskraftmaschine antreibbar sind. Hierzu werden von dem Antriebsmotor bereitgestellte Drehmomente über eine Eingangswelle 12 des Achsgetriebes 10 in das Achsgetriebe 10 eingeleitet. Das Achsgetriebe 10 umfasst ferner Ausgangswellen 14, über welche die Räder antreibbar sind. Das Achsgetriebe 10 ermöglicht somit auf hinlänglich bekannte Weise das Übertragen von Drehmomenten von dem Antriebsmotor auf die Räder. Ferner ermöglicht das Achsgetriebe 10 auf hinlänglich bekannte Weise bei einer Kurvenfahrt des Kraftfahrzeugs einen Drehzahlausgleich zwischen dem kurveninneren und dem kurvenäußeren Rad.

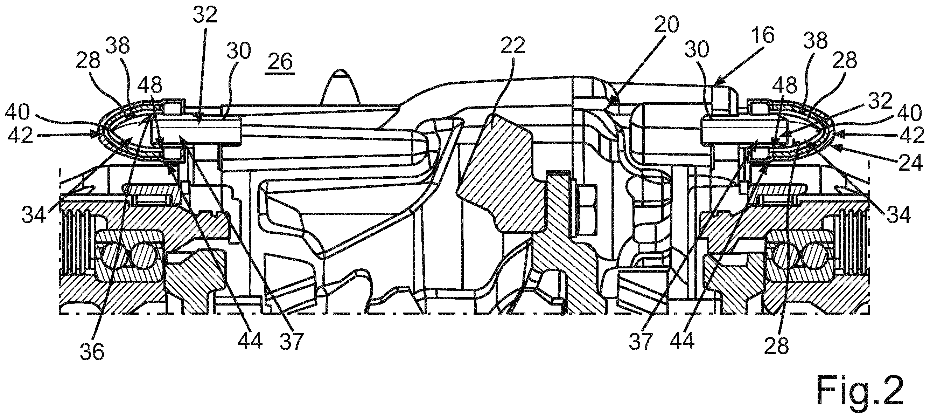

Das Achsgetriebe 10 umfasst ein im Ganzen mit 16 bezeichnetes Gehäuse, welches beispielsweise eine Mehrzahl von miteinander verbundenen und separat voneinander ausgebildeten Gehäuseelementen 18 aufweist. In Zusammenschau mit Fig. 2 ist erkennbar, dass durch das Gehäuse 16 ein Innenraum 20 begrenzt ist, in welchem eine Mehrzahl von Getriebeelementen des Achsgetriebes 10 aufgenommen ist. Bei diesen Getriebeelementen handelt es sich beispielsweise um ein aus Fig. 2 ausschnittsweise erkennbares Tellerrad 22, welches von der Eingangswelle 12 antreibbar ist. Ferner kann es sich bei den Getriebeelementen um Wellen und/oder miteinander in Eingriff stehende Zahnräder handeln.

Das Achsgetriebe 10 umfasst ferner eine im Ganzen mit 24 bezeichnete Druckausgleichsvorrichtung, welche einen Druckausgleich zwischen dem Innenraum 20 und der Umgebung 26 des Gehäuses 16 sicherstellt. Dabei zeigen Fig. 1 bis 6 die Druckausgleichsvorrichtung 24 gemäß einer ersten Ausführungsform. Die Druckausgleichsvorrichtung 24 umfasst vorliegend zwei Druckausgleichsventile 28. Ferner umfasst die Druckausgleichsvorrichtung 24 je Druckausgleichsventil 28 ein vorliegend zumindest im Wesentlichen rohrförmiges Kanalelement 30, welches einen von einem gasförmigen Medium wie beispielsweise Luft durchströmbaren Kanal 32 aufweist. Einerseits mündet der Kanal 32 in den Innenraum 20. Andererseits ist der Kanal 32 fluidisch mit der Umgebung 26 verbunden. Kommt es beispielsweise zur Entstehung eines Überdrucks in dem Gehäuse 16, sodass in dem Innenraum 20 ein erster Druck und in der Umgebung 26 ein gegenüber dem ersten Druck geringerer, zweiter Druck herrscht, so kann das gasförmige Medium, insbesondere Luft, aus dem Innenraum 20 in den Kanal 32 einströmen und über den Kanal 32 an die Umgebung 26 strömen.

Kommt es hingegen beispielsweise in dem Gehäuse 16 zur Entstehung eines Unterdrucks, sodass der erste Druck geringer als der zweite Druck ist, so kann beispielsweise Luft aus der Umgebung 26 über den Kanal 32 in den Innenraum 20 einströmen. Durch das Einströmen von gasförmigem Medium in den Innenraum 20 wird das Gehäuse 16, insbesondere der Innenraum 20, belüftet. Durch das Strömen von gasförmigem Medium aus dem Innenraum 20 beziehungsweise aus dem Gehäuse 16 an die Umgebung 26 wird das Gehäuse 16 beziehungsweise der Innenraum 20 entlüftet. Somit fungiert das jeweilige Druckausgleichsventil 28 als Belüftungsventil und/oder als Entlüftungsventil, um einen Druckausgleich zwischen der Umgebung 26 und dem Innenraum 20 zu gewährleisten.

Das jeweilige Druckausgleichsventil 28 weist ein von dem gasförmigen Medium durchströmbares Volumen 34 auf, welches durch eine innenumfangsseitige Mantelfläche 36 des jeweiligen Druckausgleichsventils 28 begrenzt ist. Dabei ist der jeweilige Kanal 32 einerseits mit dem jeweiligen Innenraum 20 und andererseits mit dem jeweiligen Volumen 34 fluidisch verbunden, sodass beispielsweise das aus dem Innenraum 20 ausströmende Medium zunächst den Kanal 32 durchströmt und dann beispielsweise in das Volumen 34 einströmt und das Volumen 34 durchströmt. Das jeweilige Druckausgleichsventil 28 weist eine Durchgangsöffnung 37 auf, über welche das Volumen 34 fluidisch mit dem Kanal 32 verbunden ist. Hierzu ist das Kanalelement 30 in die Durchgangsöffnung 37 eingesteckt beziehungsweise durch diese hindurch gesteckt, sodass zumindest ein Längenbereich des Kanalelements 30 in dem Druckausgleichsventil 28, insbesondere in dem Volumen 34, angeordnet ist. Das jeweilige Druckausgleichsventil 28 weist ferner eine der innenumfangsseitigen Mantelfläche 36 abgewandte außenumfangsseitige Mantelfläche 38 auf.

Ferner weist das jeweilige Druckausgleichsventil 28 auf einer der Durchgangsöffnung 37 abgewandten Seite vorliegend genau eine von dem gasförmigen Medium durchströmbare Druckausgleichsöffnung 40 auf, welche vorliegend schlitzförmig beziehungsweise als Schlitz, das heißt als Entlüftungsschlitz, ausgebildet ist. Das jeweilige Druckausgleichsventil 28 ist vorliegend einstückig ausgebildet, wobei das jeweilige Druckausgleichsventil 28 aus einem elastisch verformbaren Werkstoff in Form von Gummi gebildet ist. Somit ist die jeweilige Druckausgleichsöffnung 40 vollständig von aus Gummi gebildeten Wandungsbereichen 42 des Druckausgleichsventils 28 begrenzt. Die Wandungsbereiche 42 sind dabei einstückig miteinander ausgebildet und aus Gummi hergestellt. Ferner sind die Wandungsbereiche beispielsweise unter Ausbildung der als Schlitz ausgebildeten Druckausgleichsöffnung 40 geschlitzt.

Kommt es aufgrund einer Differenz zwischen dem in dem Innenraum 20 herrschenden ersten Druck und dem in der Umgebung 26 herrschenden zweiten Druck zu der beschriebenen Strömung des gasförmigen Mediums, so werden die die Druckausgleichsöffnung 40 begrenzenden Wandungsbereiche 42 beispielsweise elastisch verformt und dadurch voneinander weg bewegt, sodass die Wandungsbereiche 42 die jeweilige Druckausgleichsöffnung 40 freigeben. Somit kann das gasförmige Medium durch die Druckausgleichsöffnung 40 strömen. Nach erfolgtem Druckausgleich, sodass im Innenraum 20 und in der Umgebung 26 der gleiche Druck herrscht, strömt das Medium nicht mehr durch die Druckausgleichsöffnung 40, sodass die beim Strömen des Mediums durch die Druckausgleichsöffnung 40 elastisch verformten Wandungsbereiche 42 elastisch in einen Ausgangszustand zurückfedern können, in welchem die Wandungsbereiche 42 die Druckausgleichsöffnung 40 beispielsweise fluidisch versperren.

Ferner umfasst die Druckausgleichsvorrichtung 24 je Druckausgleichsventil 28 genau eine Schutzkappe 44, welche beispielsweise eigensteif ausgebildet ist. Die Schutzkappe 44 ist beispielsweise aus einem Kunststoff gebildet und im Gegensatz zum jeweiligen Druckausgleichsventil 28 nicht beziehungsweise mittels eines wesentlich höheren Kraftaufwands elastisch verformbar. Mit anderen Worten ist es vorzugsweise vorgesehen, dass die jeweilige Schutzkappe 44 nicht aus einem elastisch verformbaren Werkstoff gebildet ist.

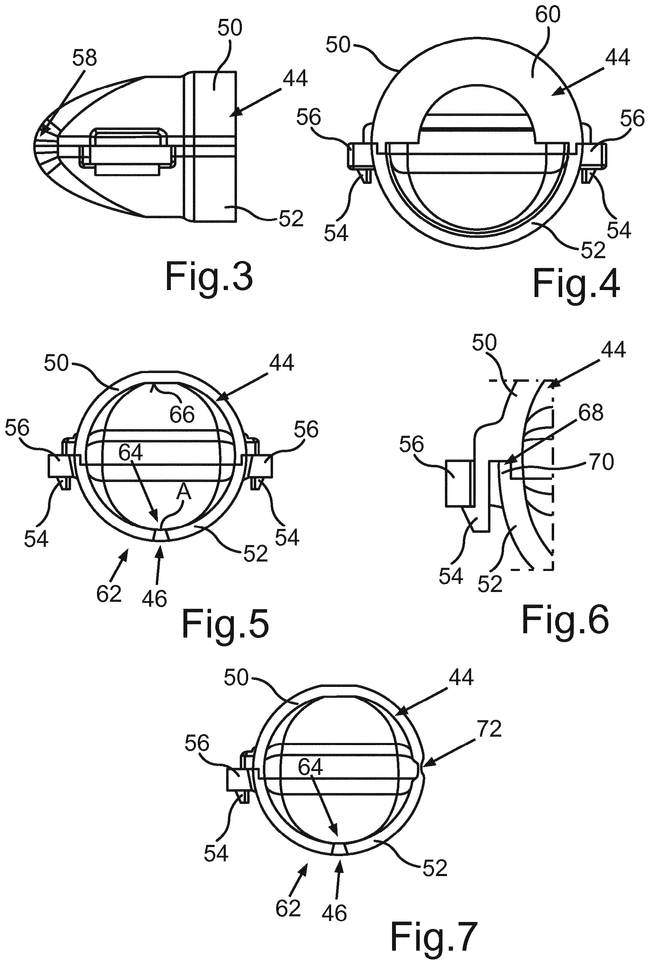

Stellvertretend für die Schutzkappen 44 ist in Fig. 3 bis 6 eine der Schutzkappen 44 der ersten Ausführungsform der Druckausgleichsvorrichtung 24 gezeigt.

Um nun ein übermäßiges Eindringen von Schmutz und Feuchtigkeit in das Volumen 34 und insbesondere in den Innenraum 20 beziehungsweise in das Gehäuse 16 besonders effektiv zu vermeiden, ist die außenumfangsseitige Mantelfläche 38 bis auf einen in Überdeckung mit einer von dem Medium durchströmbaren und eine Fläche, die in einem Bereich von einschließlich 0,95 Quadratmillimeter bis einschließlich 5 Quadratmillimetern liegt, aufweisenden Durchströmöffnung 46 (Fig. 5) der Schutzkappe 44 angeordneten Teilbereich 48 (Fig. 2) der außenumfangsseitigen Mantelfläche 38 vollständig von der jeweiligen Schutzkappe 44 umgeben. Mit anderen Worten umgibt beziehungsweise umschließt die jeweilige Schutzkappe 44 die jeweilige außenumfangsseitige Mantelfläche 38 vollumfänglich bis auf den Teilbereich 48, welcher in Überdeckung beziehungsweise Überlappung mit der von dem gasförmigen Medium durchströmbaren Durchströmöffnung 46 angeordnet ist. Die kleinste, von dem gasförmigen Medium durchströmbare Fläche der Durchströmöffnung 46 liegt dabei in einem Bereich von einschließlich 0,95 Quadratmillimeter bis einschließlich 5 Quadratmillimeter, sodass auch der Teilbereich, welcher in Überdeckung mit der Durchströmöffnung 46 angeordnet ist und somit nach außen hin nicht von der Schutzkappe 44 überdeckt wird, eine Fläche aufweist, die in einem Bereich von einschließlich 0,95 Quadratmillimeter bis einschließlich 5 Quadratmillimetern liegt.

Aus Fig. 5 ist erkennbar, dass sich die Durchströmöffnung 46 in Richtung des Volumens 34 beziehungsweise in Richtung der in der Schutzkappe 44 angeordneten außenumfangsseitigen Mantelfläche 38 verjüngt, wobei die Durchströmöffnung 46 zumindest im Wesentlichen konisch ausgebildet ist. In Fig. 5 ist der von dem gasförmigen Medium durchströmbare, kleinste Strömungsquerschnitt der Durchströmöffnung 46 mit A bezeichnet, wobei dieser Strömungsquerschnitt A die zuvor genannte, von dem gasförmigen Medium durchströmbare kleinste Fläche der Durchströmöffnung 46 aufweist. Bis auf den Teilbereich 48 ist die außenumfangsseitige Mantelfläche 38 von der Schutzkappe 44 umgeben beziehungsweise umschlossen, sodass das jeweilige Druckausgleichsventil 28 mittels der jeweiligen Schutzkappe 44 effektiv geschützt wird. Dadurch kann die Gefahr, dass Schmutz und Wasser in die Schutzkappe 44 und weiter in das Volumen 34 eindringen können, besonders gering gehalten werden, sodass ein übermäßiges Eindringen von Schmutz und Wasser in den Innenraum 20 verhindert werden kann. Gleichzeitig kann jedoch eine hinreichende Belüftung und Entlüftung des Innenraums 20 gewährleistet werden, da die von dem gasförmigen Medium durchströmbare Fläche der Durchströmöffnung 46 mindestens 0,95 Quadratmillimeter und höchstens 5 Quadratmillimeter beträgt.

Bei der ersten Ausführungsform umfasst die jeweilige Schutzkappe 44 zwei separat voneinander ausgebildete und miteinander verbindbare beziehungsweise verbundene Kappenteile 50 und 52. Das Kappenteil 50 weist wenigstens zwei als Rasthaken ausgebildete und aus Fig. 4 und 5 erkennbare Verbindungselemente 54 auf. Ferner weist das Kappenteil 52 zwei als Rastlaschen ausgebildete, mit dem Verbindungselement 54 korrespondierende Verbindungselemente 56 auf, welche formschlüssig mit den Verbindungselementen 54 zusammenwirken. Dadurch sind die Kappenteile 50 und 52 miteinander verrastet und somit formschlüssig miteinander verbunden. Zum Verbinden der Kappenteile 50 und 52 werden die Verbindungselemente 54 (Rasthaken) in die korrespondierenden Verbindungselemente 56 (Rastlaschen) eingesteckt, sodass die Rasthaken jeweilige Wandungsbereiche der Rastlaschen hintergreifen. Dadurch wirken die Rasthaken formschlüssig mit den Rastlaschen zusammen, wodurch die Kappenteile 50 und 52 formschlüssig miteinander verbunden und damit miteinander verrastet sind.

Aus Fig. 3 ist besonders gut erkennbar, dass die Schutzkappe 44 eine Abschirm- und Abtropfkante 58 aufweist, von welcher Wasser und Feuchtigkeit besonders gut abtropfen können. Insgesamt ist erkennbar, dass die Schutzkappen 44 die Druckausgleichsventile 28 zumindest nahezu komplett umschließen, wodurch die Druckausgleichsventile 28 vor Schmutz und Wasser vollumfänglich abgeschirmt sind. Ferner ist es vorgesehen, dass die Schutzkappen 44 an die Druckausgleichsventile 28 direkt geklipst werden, sodass die Schutzkappen 44 beispielsweise über jeweilige Pressverbindungen mit den Druckausgleichsventilen 28 verbunden sind.

Aus Fig. 4 ist erkennbar, dass zumindest das Kappenteil 50 einen Kragen 60 aufweist, welcher als Rastierkante fungiert. Mittels dieser Rastierkante wird die jeweilige Schutzkappe 44 formschlüssig mit dem jeweiligen Druckausgleichsventil 28 verbunden. Hierzu hintergreift beispielsweise die Rastierkante (Kragen 60) zumindest einen Wandungsbereich des jeweiligen Druckausgleichsventils 28, wodurch die jeweilige Schutzkappe 44 an dem jeweiligen Druckausgleichsventil 28 gehalten ist. Das untere Kappenteil 52 weist eine solche Rastierkante nicht auf und wird als Montagehilfe zum Einführen des als Unterschale ausgebildeten unteren Kappenteils 52 unter das jeweilige Druckausgleichsventil 28 genutzt.

Um die jeweilige Schutzkappe 44 am jeweiligen Druckausgleichsventil 28 zu montieren, wird beispielsweise zunächst das untere Kappenteil 52 ohne das als Oberschale ausgebildete Kappenteil 50 unter das jeweilige Druckausgleichsventil 28 geschoben. Daraufhin wird die Oberschale (oberes Kappenteil 50) auf das jeweilige Druckausgleichsventil 28 derart aufgesetzt, dass die Rastierkante den Wandungsbereich des Druckausgleichsventils 28 hintergreift und die Rasthaken in die Rastlaschen eingesteckt werden. Sind dann die Kappenteile 50 und 52 über die Verbindungselemente 54 und 56 miteinander verbunden, so ist die jeweilige Schutzkappe 44 insgesamt am jeweiligen Druckausgleichsventil 28 sicher gehalten.

In Einbaulage der Druckausgleichsvorrichtung 24 ist die Durchströmöffnung 46 auf einer in Fahrzeughochrichtung nach unten weisenden Seite 62 der Schutzkappe 44 angeordnet, wobei die Durchströmöffnung 46 insbesondere an der tiefsten Stelle 64 einer der außenumfangsseitigen Mantelfläche 38 zugewandten, weiteren innenumfangsseitigen Mantelfläche 66 der Schutzkappe 44 angeordnet ist. Somit kann beispielsweise sich in der Schutzkappe 44 bildendes Kondensat zur Stelle 64 und somit zur Durchströmöffnung 46 strömen, die Durchströmöffnung 46 durchströmen und somit aus der Schutzkappe 44 ausströmen. Die Druckausgleichsvorrichtung 24 nimmt dabei ihre Einbaulage in vollständig hergestelltem Zustand des Kraftfahrzeugs ein.

Aus Fig. 6 ist erkennbar, dass das Kappenteil 50 eine als Nut ausgebildete und als Dichtungsnut fungierende Ausnehmung 68 aufweist, in welche eine korrespondierende Nase 70 des unteren Kappenteils 52 dichtend eingreift. Dadurch sind die Kappenteile 50 und 52 gegenseitig gegen übermäßigen Schmutz- und Wassereintritt abgedichtet. Zusätzlich dient die vorliegend umlaufende Nut (Ausnehmung 68) als Zentrierung, um die Kappenteile 50 und 52 relativ zueinander zu positionieren beziehungsweise auszurichten. Bei der in Fig. 1 bis 6 gezeigten ersten Ausführungsform sind die Kappenteile 50 und 52 separat voneinander ausgebildet und mittels der Verbindungselemente 54 und 56 miteinander verbindbar beziehungsweise miteinander verbunden.

Fig. 7 zeigt die Schutzkappe 44 einer zweiten Ausführungsform der Druckausgleichsvorrichtung 24. Bei der zweiten Ausführungsform sind die Kappenteile 50 und 52 einstückig miteinander ausgebildet und dabei über ein als Filmscharnier 72 ausgebildetes Scharnier verschwenkbar miteinander verbunden, sodass die einstückig miteinander ausgebildeten Kappenteile 50 und 52 um eine durch das Filmscharnier 72 gebildete Schwenkachse relativ zueinander verschwenkt werden können. Mittels der Verbindungselemente 54 und 56 können die Kappenteile 50 und 52 aneinander fixiert und dadurch gegen ein unerwünschtes Verschwenken relativ zueinander gesichert werden.

Bei der zweiten Ausführungsform wird das untere Kappenteil 52 beispielsweise zunächst unter das Druckausgleichsventil 28 geschoben, während die Verbindungselemente 54 und 56 noch nicht miteinander verbunden sind. Befindet sich das untere Kappenteil 52 in seiner gewünschten Position, so wird das obere Kappenteil 50 auf das untere Kappenteil 52 zugeklappt derart, dass der Rasthaken in die Rastlasche eingesteckt wird, wodurch die Verbindungselemente 54 und 56 miteinander verrastet werden. Dann hintergreift die Rastierkante (Kragen 60) den genannten Wandungsbereich des Druckausgleichsventils 28, wodurch die Schutzkappe 44 sicher und fest am jeweiligen Druckausgleichsventil 28 gehalten ist.

## Patentansprüche

1. Druckausgleichsvorrichtung (24) für ein Gehäuse (16), insbesondere eines Kraftfahrzeugs, mit wenigstens einem Druckausgleichsventil (28), welches eine ein von einem gasförmigen Medium durchströmbares Volumen (34) des Druckausgleichsventils (28) begrenzende innenumfangsseitige Mantelfläche (36), eine der innenumfangsseitigen Mantelfläche (36) abgewandte außenumfangsseitige Mantelfläche (38) und wenigstens eine von dem Medium durchströmbare und vollständig von aus einem elastisch verformbaren Werkstoff gebildeten Wandungsbereichen (42) des Druckausgleichsventils (28) begrenzte Druckausgleichsöffnung (40) aufweist, und mit wenigstens einer Schutzkappe (44),
**dadurch gekennzeichnet, dass**
die außenumfangsseitige Mantelfläche (38) bis auf einen in Überdeckung mit einer von dem Medium durchströmbaren und eine Fläche, die in einem Bereich von 0,95 bis 5 Quadratmillimetern liegt, aufweisenden Durchströmöffnung (46) der Schutzkappe (44) angeordneten Teilbereich (48) der außenumfangsseitigen Mantelfläche (38) vollständig von der Schutzkappe (44) umgeben ist.

2. Druckausgleichsvorrichtung (24) nach Anspruch 1,
**dadurch gekennzeichnet, dass**
die Fläche in einem Bereich von 0,95 bis 3,2 Quadratmillimetern liegt.

3. Druckausgleichsvorrichtung (24) nach Anspruch 1 oder 2,
**dadurch gekennzeichnet, dass**
sich zumindest ein Längenbereich der Durchströmöffnung (46) in Richtung des Volumens (10) verjüngt.

4. Druckausgleichsvorrichtung (24) nach einem der vorhergehenden Ansprüche,
**dadurch gekennzeichnet, dass**
die Schutzkappe (44) wenigstens zwei Kappenteile (50, 52) aufweist, welche über wenigstens ein Scharnier (72) miteinander verbunden und relativ zueinander verschwenkbar sind.

5. Druckausgleichvorrichtung (24) nach Anspruch 4,
**dadurch gekennzeichnet, dass**
die Kappenteile (50, 52) einstückig miteinander ausgebildet sind, wobei das Scharnier (72) als Filmscharnier (72) ausgebildet ist.

6. Druckausgleichsvorrichtung (24) nach Anspruch 4 oder 5,
**dadurch gekennzeichnet, dass**
die Kappenteile (50, 52) jeweilige Verbindungselemente (54, 56) aufweisen, mittels welchen die Kappenteile (50, 52), insbesondere formschlüssig, miteinander verbindbar sind.

7. Druckausgleichsvorrichtung (24) nach einem der vorhergehenden Ansprüche,
**dadurch gekennzeichnet, dass**
die Schutzkappe (44) formschlüssig direkt mit dem Druckausgleichsventil (28) verbunden ist.

8. Komponente (10) für ein Kraftfahrzeug, mit wenigstens einem Gehäuse (16) und mit wenigstens einer Druckausgleichsvorrichtung (24) nach einem der vorhergehenden Ansprüche.

9. Komponente (10) nach Anspruch 8,
**dadurch gekennzeichnet, dass**
die Durchströmöffnung (46) auf einer in Fahrzeughochrichtung nach unten weisenden Seite (62) der Schutzkappe (44) angeordnet ist.

10. Komponente (10) nach Anspruch 8 oder 9,
**dadurch gekennzeichnet, dass**
die Durchströmöffnung (46) an der in Fahrzeughochrichtung tiefsten Stelle (64) einer der außenumfangseitigen Mantelfläche (38) zugewandten, weiteren innenumfangsseitigen Mantelfläche (66) der Schutzkappe (44) angeordnet ist.

## Claims

1. Pressure compensation device (24) for a housing (16), in particular of a motor vehicle, having at least one pressure compensation valve (28), which has an inner circumferential surface (36) delimiting a volume (34), through which a gaseous medium can flow, of the pressure compensation valve (28), an outer circumferential surface (38) facing away from the inner circumferential surface (36) and at least one pressure compensation opening (40) through which the medium can flow and which is delimited entirely by wall sections (42), formed by an elastically deformable material, of the pressure compensation valve (28), and having at least one protective cap (44),
**characterised in that**
the outer circumferential surface (38) is entirely surrounded by the protective cap (44) apart from a partial section (48) of the outer circumferential surface (38), said partial section being disposed overlapping with a through-flow-opening (46), through which the medium can flow and which has a surface which lies in a range from 0.95 to 5 square millimetres, of the protective cap (44).

2. Pressure compensation device (24) according to claim 1,
**characterised in that**
the surface lies in a range from 0.95 to 3.2 square millimetres.

3. Pressure compensation device (24) according to claim 1 or 2,
**characterised in that**
at least one length section of the through-flow-opening (46) tapers in the direction of the volume (10).

4. Pressure compensation device (24) according to any of the preceding claims,
**characterised in that**
the protective cap (44) has at least two cap parts (50, 52), which are connected with one another via at least one hinge (72) and can be pivoted relatively to one another.

5. Pressure compensation device (24) according to claim 4,
**characterised in that**
the cap parts (50, 52) are formed integrally with one another, wherein the hinge (72) is in the form of an integral hinge (72).

6. Pressure compensation device (24) according to claim 4 or 5,
**characterised in that**
the cap parts (50, 52) have respective connecting elements (54, 56) by means of which the cap parts (50, 52) can be connected with one another in particular in form-fitting manner.

7. Pressure compensation device (24) according to any of the preceding claims,
**characterised in that**
the protective cap (44) is connected in form-fitting manner directly with the pressure compensation valve (28).

8. Component (10) for a motor vehicle, having at least one housing (16) and having at least one pressure compensation device (24) according to any of the preceding claims.

9. Component (10) according to claim 8,
**characterised in that**
the through-flow-opening (46) is disposed on a side (62), facing downwards in vehicle vertical direction, of the protective cap (44).

10. Component (10) according to claim 8 or 9,
**characterised in that**
the through-flow-opening (46) is disposed on the lowest point in vehicle vertical direction of a further inner circumferential surface (66), facing the outer circumferential surface (38), of the protective cap (44).

## Revendications

1. Dispositif d'équilibrage de pression (24) pour un carter (16), en particulier d'un véhicule automobile, avec au moins une soupape d'équilibrage de pression (28), qui comporte une surface enveloppante (36) située du côté de la périphérie intérieure et délimitant un volume (34), pouvant être traversé par un fluide gazeux, de la soupape d'équilibrage de pression (28), une surface enveloppante (38) située du côté de la périphérie extérieure et regardant à l'opposé de la surface enveloppante (36) située du côté de la périphérie intérieure et au moins une ouverture d'équilibrage de pression (40) pouvant être traversée par le fluide et complètement limitée par des zones de paroi (42), formées en un matériau élastiquement déformable, de la soupape d'équilibrage de pression (28), et avec au moins un capot de protection (44),
**caractérisé en ce que**, mis à part une zone partielle (48), agencée en recouvrement avec une ouverture de passage (46), pouvant être traversée par le fluide et présentant une surface qui est comprise entre 0,95 et 5 millimètres carrés, du capot de protection (44), de la surface enveloppante (38) située du côté de la périphérie extérieure, la surface enveloppante (38) située du côté de la périphérie extérieure est complètement entourée par le capot de protection (44).

2. Dispositif d'équilibrage de pression (24) selon la revendication 1, **caractérisé en ce que** la surface est comprise entre 0,95 et 3,2 millimètres carrés.

3. Dispositif d'équilibrage de pression (24) selon la revendication 1 ou 2, **caractérisé en ce qu'**au moins une zone longitudinale de l'ouverture de passage (46) se rétrécit en direction du volume (10).

4. Dispositif d'équilibrage de pression (24) selon l'une quelconque des revendications précédentes, **caractérisé en ce que** le capot de protection (44) comporte au moins deux parties de capot (50, 52) qui sont liées l'une à l'autre par l'intermédiaire d'au moins une charnière (72) et qui peuvent pivoter l'une par rapport à l'autre.

5. Dispositif d'équilibrage de pression (24) selon la revendication 4, **caractérisé en ce que** les parties de capot (50, 52) sont réalisées ensemble d'une seule pièce, la charnière (72) étant réalisée comme une charnière à film (72).

6. Dispositif d'équilibrage de pression (24) selon la revendication 4 ou 5, **caractérisé en ce que** les parties de capot (50, 52) comportent des éléments de liaison (54, 56) respectifs au moyen desquels les parties de capot (50, 52) peuvent être liées l'une à l'autre, en particulier par concordance de forme.

7. Dispositif d'équilibrage de pression (24) selon l'une quelconque des revendications précédentes, **caractérisé en ce que** le capot de protection (44) est lié directement par concordance de forme à la soupape d'équilibrage de pression (28).

8. Composant (10) pour un véhicule automobile, avec au moins un carter (16) et avec au moins un dispositif d'équilibrage de pression (24) selon l'une quelconque des revendications précédentes.

9. Composant (10) selon la revendication 8, **caractérisé en ce que** l'ouverture de passage (46) est agencée sur un côté (62), regardant vers le bas dans la direction verticale du véhicule, du capot de protection (44).

10. Composant (10) selon la revendication 8 ou 9, **caractérisé en ce que** l'ouverture de passage (46) est agencée au niveau du point (64) le plus bas, dans la direction verticale du véhicule, d'une autre surface enveloppante (66), située du côté de la périphérie intérieure et regardant vers la surface enveloppante (38) située du côté de la périphérie extérieure, du capot de protection (44).
